Europäisches Patentamt

European Patent Office

Office européen des brevets

(11) Publication number: **0 474 977 A2**

# EUROPEAN PATENT APPLICATION

(21) Application number: **91109222.9**

(22) Date of filing: **06.06.91**

(51) Int. Cl.5: **G01S 7/28, H01Q 3/26**

(30) Priority: **25.08.90 GB 9018714**

(43) Date of publication of application:
**18.03.92 Bulletin 92/12**

(84) Designated Contracting States:
**DE ES FR IT**

(71) Applicant: **Siemens Plessey Electronic
Systems Limited
Oakcroft Road
Chessington, Surrey KT9 1OZ(GB)**

(72) Inventor: **Young, Roger
28 Stephenson Road
Cowes, Isle of Wight, P031 7PP(GB)**

(74) Representative: **Fish, Norman Ernest
Siemens Group Services Limited,
Intellectual Property Department, Roke
Manor, Old Salisbury Lane
Romsey, Hampshire SO51 0ZN(GB)**

(54) Improvements in or relating to radar systems.

(57) In radar apparatus where an antenna comprises
a phased planar array of radiator elements operative
to provide a steerable beam, the suppression of
sidelobes can be effected by phase weighting.

The apparatus of the invention comprises a
planar array of radiator elements, in which the ele-
ments of the said array are operatively associated
with beam steering means, the said array being
defined by a plurality of groups of elements, each
group having n elements, the beam steering means
comprising a beam forming network, and n sub-array
phase controllers one for each of n sub-arrays
wherein each sub-array is defined by one element
selected randomly from each group, the sub-array
phase controllers each being effective to control the
phase of signals radiated by a sub-array with which
it is operatively associated. This enables the phase
of signals from one or more sub-arrays to be phase
offset and thus provide a phase weighting effective
for good sidelobe suppression.

Fig.2.

This invention relates to radar systems and more especially it relates to radar systems and apparatus wherein an antenna comprises a phased planar array of radiator elements operative to provide a steerable beam.

The beam radiated in such systems is steered by a relative phase control of the signals from the elements of the array. The beam comprises a main lobe and sidelobes which it is normally required to suppress to some extent in order to avoid the reception of spurious signals.

Various techniques for sidelobe suppression are known such as amplitude weighting for example but this form of weighting is not efficient since signals are absorbed in an amplitude weighting network.

Phase weighting is also known wherein for a given element, phase weighting magnitude is determined in dependence upon element distance from the centre of an array but this technique does not produce particularly good sidelobe suppression and may introduce grating lobes.

According to the present invention radar apparatus comprises a planar array of radiator elements wherein the elements of the said array are operatively associated with beam steering means, the said array being defined by a plurality of groups of elements, each group having n elements, the beam steering means comprising a beam forming network, and n sub-array phase controllers one for each of n sub-arrays wherein each sub-array is defined by one element selected randomly from each group, the sub-array phase controllers each being effective to control the phase of signals radiated by a sub-array with which it is operatively associated .

The apparatus may comprise a phase steering controller to which the sub-array phase controllers are responsive for beam steering purposes and which is effective to control the phase of signals fed to the elements of one or more sub-arrays for sidelobe suppression purposes.

The phase of signals radiated by the sub-arrays may thus be controlled so as to produce a beam steering function and the phase of signals radiated from one or more sub-arrays may be phase offset, thereby to effect phase weighting as appropriate for sidelobe suppression purposes.

In a system according to the invention an important feature is that the elements of a sub-array comprise one element selected at random from each group so that the sub-array is spread across the array as a whole whereby the sub-arrays are interleaved but do not form a regular pattern which could give rise to grating lobes.

The planar array may comprise a co-ordinate array of radiator elements, which co-ordinate array comprises a plurality of similar groups of n elements.

Each group may comprise a square matrix of n elements.

Four elements may define each group whereby four sub-array phase controllers are provided.

The beam forming network may comprise two parts between which the sub-array phase controllers are coupled.

The elements of the array may be fed from one part of the beam forming network via transmit/receive modules, each transmit/receive module including variable phase delay means responsive to signals fed from the sub-array phase controllers via the said one part of the beam forming network for effecting appropriate phase control of signals radiated by the elements of a sub-array with which that sub-array phase controller is operatively associated.

The transmit/receive modules may each additionally comprise amplifier means for transmission and reception, and a switch, the switch being effective to bring into circuit the appropriate amplifier in accordance with a selected mode of operation that is, a transmit mode or a receive mode.

One embodiment of the invention will now be described solely by way of example with reference to the accompanying drawings in which:

Figure 1 is of somewhat schematic plan view of a part of a planar array of radiator elements,

Figure 2 is a simplified circuit/block diagram of apparatus for feeding signals to and receiving signals from the elements of the array shown in Figure 1,

Figure 3 is a block schematic circuit diagram showing in more detail one part of the circuit/block diagram of Figure 2,

Figure 4 is a field strength diagram illustrating the field strength associated with one mode of operation of the apparatus described with reference to Figure 1, Figure 2 and Figure 3; and,

Figure 5 is a further field strength diagram illustrating the field strength produced in an alternative mode of operation of the apparatus described with reference to Figures 1, 2 and 3.

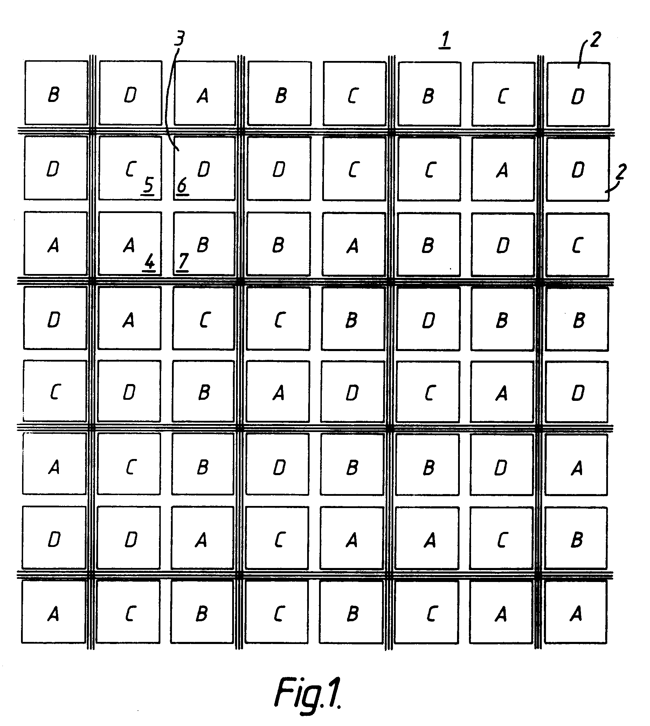

Referring now to Figure 1 a phased planar array antenna 1 comprises a plurality of elements 2 which are arranged to define a co-ordinate matrix of elements, the elements of the matrix being divided into groups of four. A group 3 for example comprises four elements numbered 4, 5, 6 and 7. Each group of elements is similar and comprises a square matrix of elements.

In operation of the antenna shown in Figure 1 the elements of the array are treated as four sub-arrays A, B, C and D, each sub-array comprising an element selected at random from each group. Thus in the group 3, the element 4 is operatively associated with the sub-array A the element 5 is operatively associated with the sub-array C the element 6 is operatively associated with the sub-array D and the element 7 is operatively associated with the sub-array B. Thus each sub-array comprises elements distributed across the whole of the array and since the choice of element for a particular sub-array within a group is random, grating lobes which might be produced by a regular pattern of elements are avoided.

It will be appreciated that an array as just before described with reference to Figure 1 may be driven with sub-array control circuitry so that a beam steering function can be achieved by selective phase control of the elements of the array and sidelobe suppression can be effected by offsetting the beam position of one or more of the sub-arrays from a nominal beam position.

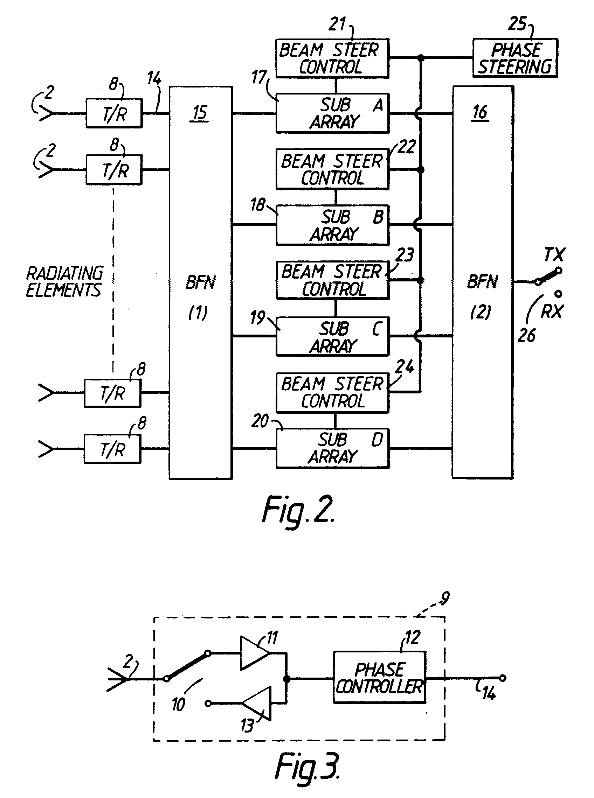

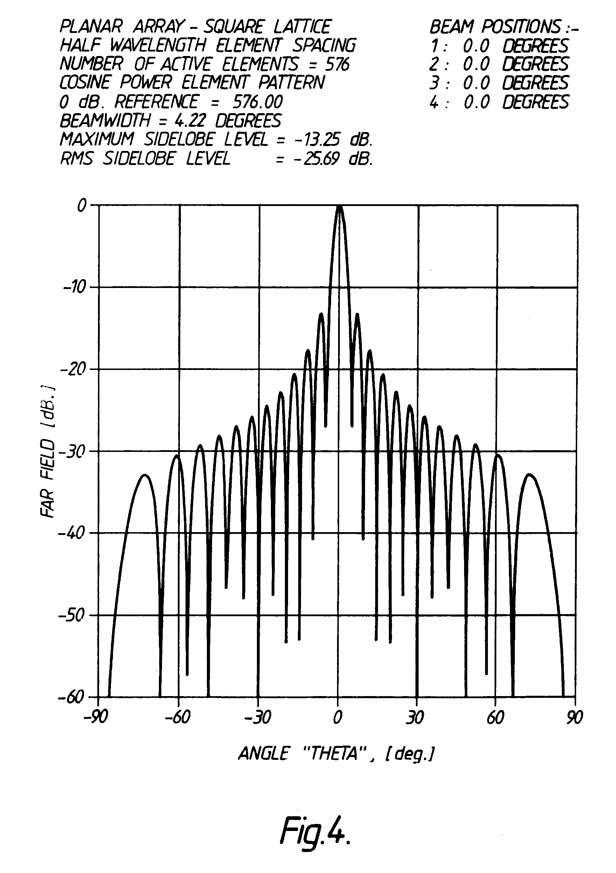

Apparatus for effecting phase control of the signals fed to the elements may be achieved in a variety of different ways using conventional circuitry but one system will be described by way of example with reference to Figures 2 and 3. Referring now to Figure 2 the elements 2 of the array, shown also in Figure 1, are each coupled to a transmit/receive module 8 the transmit/receive module is shown in more detail within the broken line 9 of Figure 3 and comprises a switch 10 which in the position shown feeds received signals via an input amplifier 11 to a phase controller 12. The switch 10 is a two position switch and in the other position, signals for transmission are fed from the phase controller 12 to the element 2 as shown in Figure 3 via a power amplifier 13. The transmit/receive modules are coupled via a line 14 to one part 15 of a beam forming network. A further part 16 of the beam forming network is coupled to the first part 15 via sub-array phase controllers 17, 18, 19 and 20 which are effective to control the sub-arrays A,B,C, and D respectively. The sub-array phase controllers 17, 18, 19 and 20 are respectively operatively associated with beam steering controllers 21, 22, 23 and 24. The sub-array phase controllers 17, 18, 19 and 20 and the beam steering controllers 21, 22, 23 and 24 are all coupled to a phase steering computer 25. The phase steering computer 25 serves to control the sub-array phase controllers 17 to 20 and the beam steering controllers 21 to 24 so that digital control signals are fed through the part 15 of the beam forming network to the phase controllers, such as the phase controller 12, which are embodied in each of the transmit receive modules 8 to effect appropriate phase control.

It will therefore be appreciated that the phase steering computer 25 may be operated to control the phase of signals radiated by each element of the array whereby a beam steering function is achieved, and by suitably offsetting the phase of signals radiated by one or more of the sub-arrays, improved sidelobe suppression may be effected.

With the elements of the array arranged at half wavelength spacing and in an array comprising five hundred and seventy six elements, as shown in Figure 4, a beam width of 4.22 degrees is achieved having a maximum sidelobe level of minus 13.25dB with the beam position of all four sub-arrays controlled to provide an on line, or zero degree position.

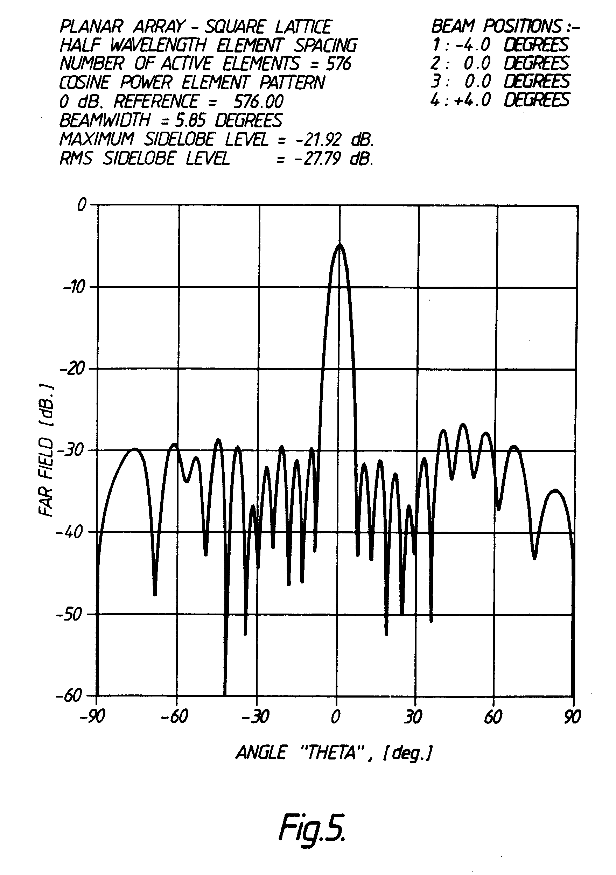

If however the beam positions of sub-arrays A and D are offset from the on line zero degree positions by minus 4 degrees and plus 4 degrees respectively, a field distribution diagram as shown in Figure 5 is produced wherein the sidelobes are significantly suppressed and provide a maximum sidelobe level of about minus 22dB.

It will be appreciated that the apparatus as hereinbefore described with reference to Figure 2 and Figure 3 comprises known modules wherein for example the beam forming network, comprising the two parts 15 and 16, may for example be Blass or Butler matrices.

Various other modifications may be made to the arrangement described without departing from the scope of the invention and the switch 10 and a switch 26 which is operated to feed signals from the beam forming network 15, 16 either to a transmitter or to a receiver may be semiconductor switches.

## Claims

1. Radar apparatus comprising a planar array of radiator elements wherein the elements of the said array are operatively associated with beam steering means, the said array being defined by a plurality of groups of elements, each group having n elements, the beam steering means comprising a beam forming network, and n sub-array phase controllers one for each of n sub-arrays wherein each sub-array is defined by one element selected randomly from each group, the sub-array phase controllers each being effective to control the phase of signals radiated by a sub-array with which it is operatively associated.

2. Radar apparatus as claimed in claim 1, which comprises a phase steering controller to which the sub-array phase controllers are responsive for beam steering purposes and which is effective to control the phase of signals fed to the elements of one or more sub-arrays for sidelobe suppression purposes.

3. Radar apparatus as claimed in claim 1 or 2, in which the elements of a sub-array comprise one element selected at random from each group so that the sub-array is spread across the array as a whole whereby the sub-arrays are interleaved but do not form a regular pattern which could give rise to grating lobes.

4. Radar apparatus as claimed in any one of claims 1 to 3, in which the planar array comprises a co-ordinate array of radiator elements, which co-ordinate array comprises a plurality of similar groups of n elements.

5. Radar apparatus as claimed in claim 4, in which each group comprises a square matrix of n elements.

6. Radar apparatus as claimed in claim 5, in which each group comprises four elements each of which is associated with a sub-array phase controller.

7. Radar apparatus as claimed in any one of claims 1 to 6, in which the beam forming network comprises two parts between which the sub-array phase controllers are coupled.

8. Radar apparatus as claimed in any one of claims 1 to 7, comprising means arranged to feed the elements of the array from one part of the beam forming network via transmit/receive modules, each transmit/receive module including variable phase delay means responsive to signals fed from the sub-array phase controllers via the said one part of the beam forming network for effecting appropriate phase control of signals radiated by the elements of a sub-array with which that sub-array phase controller is operatively associated.

9. Radar apparatus as claimed in claim 8, in which the transmit/receive modules each additionally comprise amplifier means for transmission and reception, and a switch, the switch being effective to bring into circuit the appropriate amplifier in accordance with a selected mode of operation, that is, a transmit mode or a receive mode.

10. Radar apparatus, substantially as hereinbefore described with reference to any one Figures 1 to 3 of the accompanying drawings.

11. A radar system, comprising radar apparatus substantially as claimed in any one of claims 1 to 10.

12. A radar system, substantially as hereinbefore described.

Fig.1.

Fig.2.

Fig.3.

PLANAR ARRAY – SQUARE LATTICE
HALF WAVELENGTH ELEMENT SPACING
NUMBER OF ACTIVE ELEMENTS = 576
COSINE POWER ELEMENT PATTERN
0 dB. REFERENCE = 576.00
BEAMWIDTH = 4.22 DEGREES
MAXIMUM SIDELOBE LEVEL = −13.25 dB.
RMS SIDELOBE LEVEL = −25.69 dB.

BEAM POSITIONS :−
1 : 0.0 DEGREES
2 : 0.0 DEGREES
3 : 0.0 DEGREES
4 : 0.0 DEGREES

*Fig.4.*

PLANAR ARRAY - SQUARE LATTICE
HALF WAVELENGTH ELEMENT SPACING
NUMBER OF ACTIVE ELEMENTS = 576
COSINE POWER ELEMENT PATTERN
0 dB. REFERENCE =  576.00
BEAMWIDTH = 5.85 DEGREES
MAXIMUM SIDELOBE LEVEL = -21.92 dB.
RMS SIDELOBE LEVEL      = -27.79 dB.

BEAM POSITIONS :-
1 : -4.0  DEGREES
2 :  0.0  DEGREES
3 :  0.0  DEGREES
4 : +4.0  DEGREES

ANGLE "THETA" , [deg.]

*Fig.5.*